# EUROPEAN PATENT SPECIFICATION

(11) **EP 4 483 518 B1**
(45) Date of publication and mention of the grant of the patent: **07.10.2026**
(21) Application number: 23708580.8
(22) Date of filing: 21.02.2023
(51) Int. Cl.: H04L 5/00, H04L 1/00

(54) **RATE-MATCHING DESIGN FOR TRANSMITTING 16-QAM IN DOWNLINK IN TDD NB-IOT**
RATENANPASSUNGSENTWURF ZUR ÜBERTRAGUNG VON 16-QAM IN ABWÄRTSVERBINDUNGEN IN TDD-NB-IOT
CONCEPTION D'ADAPTATION DE DÉBIT POUR TRANSMETTRE 16-QAM DANS UNE LIAISON DESCENDANTE DANS UN NB-IOT TDD

(30) Priority: 21.02.2022 US 202263312305 P
(43) Date of publication of application: 01.01.2025
(73) Proprietor: Telefonaktiebolaget LM Ericsson (publ), 164 83 Stockholm (SE)
(72) Inventor: CHEN, Jie, Beijing 100102 (CN); MEDINA ACOSTA, Gerardo Agni, 195 56 MÄRSTA (SE); WANG, Yuan, Beijing 100102 (CN); LUNDQVIST, Ola, 655 94 KARLSTAD (SE)
(74) Representative: Ericsson
(86) International application number: PCT/SE2023/050154
(87) International publication number: WO 2023/158367

(56) References cited:
- US-A1- 2019 239 057
- US-A1- 2021 014 851
- ERICSSON: "On the support of 16-QAM for unicast in UL and DL in TDD NB-IoT", vol. RAN WG1, no. e-Meeting; 20211111 - 20211119, 5 November 2021 (2021-11-05), XP052075436, Retrieved from the Internet <URL:https://ftp.3gpp.org/tsg_ran/WG1_RL1/TSGR1_107-e/Docs/R1-2112363.zip R1-2112363 On the support of 16-QAM for unicast in UL and DL in TDD NB-IoT.docx> [retrieved on 20211105]

## Description

### TECHICAL FIELD

The present disclosure generally relates to the field or wireless communication, and more particularly to rate-matching design for transmitting 16-QAM in downlink in TDD NB-IoT.

### BACKGROUND

During the radio access network (RAN) plenary meeting #86, a new Work Item (WI) entitled "Rel-17 enhancements for NB-IoT and LTE-MTC" was agreed [1]. One of its objectives consists in specifying 16-quadrature amplitude modulation (16-QAM) for unicast in uplink (UL) and downlink (DL) as stated in the Work Item Description (WID):
- *Specify 16-QAM for unicast in UL and DL, including necessary changes to DL power allocation for NPDSCH and DL TBS. This is to be specified without a new NB-IoT UE category. For DL, increase in maximum TBS of e.g. 2x the Rel-16 maximum, and soft buffer size will be specified by modifying at least existing Category NB2. For UL, the maximum TBS is not increased. [NB-IoT] [RAN1, RAN4]*
   *o Extend the NB-IoT channel quality reporting based on the framework of Rel-14-16, to support 16-QAM in DL. [NB-IoT] [RAN2, RAN1, RAN4]*
- *Specify signaling for neighbor cell measurements and corresponding measurement triggering before RLF, to reduce the time taken to RRC reestablishment to another cell, without defining specific gaps. [NB-IoT] [RAN2, RAN4]*

For downlink, the design of the transport block size / modulation and coding scheme (TBS/MCS) table accounted for the different deployment modes in narrowband internet of things (NB-IoT) which are "Stand-alone", "Guard-band", and "In-band" deployments.

For the TBS/MCS table design the following agreements were reached for "Stand-alone" and "Guard-band" deployments:

### Agreement

Confirm the working assumption that the following TBS indices are introduced for downlink with modification shown with mark-up:

| *I*_{TBS} | *I*_{SF} | | | | | | | |
|---|---|---|---|---|---|---|---|---|
| | **0** | **1** | **2** | **3** | **4** | **5** | **6** | **7** |
| 14 | 256 | 552 | 840 | 1128 | 1416 | 1736 | 2280 | 2856 |
| 15 | 280 | 600 | 904 | 1224 | 1544 | 1800 | 2472 | 3112 |
| 16 | 296 | 632 | 968 | 1288 | 1608 | 1928 | 2600 | 3240 |
| 17 | 336 | 696 | 1064 | 1416 | 1800 | 2152 | 2856 | 3624 |
| 18 | 376 | 776 | 1160 | 1544 | 1992 | 2344 | 3112 | 4008 |
| 19 | 408 | 840 | 1288 | 1736 | 2152 | 2600 | 3496 | 4264 |
| 20 | 440 | 904 | 1384 | 1864 | 2344 | 2792 | 3752 | 4584 |
| 21 | 488 | 1000 | 1480 | 1992 | 2472 | 2984 | 4008 | 4968 |

### Agreement

Confirm the working assumption:
- For standalone and guardband deployments, the downlink TBS entries between 14 (TBS of 2856 for I_SF=7) and 21 are used for 16QAM.

On the other hand, the "In-band" deployment was based on the TBS/MCS table design as for "Stand-alone" and "Guard-band" deployments, the only difference is that the "In-band deployment" will span from the I_TBS index 11 to 17 (re-using part of the TBS/MCS for quadrature phase shift keying (QPSK), i.e., TBS entries corresponding to I_TBS indices 11, 12, and 13). The "In-band" deployment starts from an earlier I_TBS index due to that this deployment mode has less resource elements available for data which translates into a higher overhead leading to higher achievable code rates compared to other deployment modes.

### Agreement

The following working assumption is confirmed with following modifications:
- For inband deployments, the downlink TBS entries between 11 (TBS of 2024 for I_SF=7) and ⁅17⁆ are used for 16QAM.

One other fundamental aspect of the support of 16-QAM in DL is that only 1 repetition was agreed to be supported.

### Agreement

Repetitions larger than 2 are not supported in case of 16QAM for downlink
- FFS: Whether repetition of 2 is supported or not

### Agreement

Repetition of 2 is NOT supported for 16-QAM in downlink.

There were more agreements for the support of 16-QAM in downlink in terms of DL power control, channel quality indicator (CQI) table, downlink control information (DCI) design, and so on, which are now reflected in version 17.0.0 of the technical specifications (see e.g., TS 36.211 [2], TS 36.212 [3], and TS 36.213[4]).

Coming back to the WID and description of the Rel-17 for specifying 16-QAM for unicast in UL and DL, we can notice that there is no explicit mention on whether this feature should be for frequency division duplex (FDD) operation only, time division duplex (TDD) operation or both. On this matter, recently there has been interest from some companies participating in 3rd generation partnership project (3GPP) on supporting TDD operation even though the whole standardization phase developed under the context of FDD operation. However, in R1-2112363 [5] it has been pointed out that supporting TDD operation for 16-QAM won't be transparent since the following impacts have been foreseen:
The foreseen RAN1 impacts from supporting 16-QAM for TDD NB-IoT are:
   - In legacy TDD NB-IoT, NPDSCH can be transmitted on DwPTS.
   - For NPDSCH without repetition, rate matching is used for the Resource Element (RE) mapping into the special subframe.
   - The RE mapping on special subframes including rate matching aspects would have to be discussed for supporting 16-QAM in TDD NB-IoT.
The foreseen RAN4 impacts from supporting 16-QAM for TDD NB-IoT are:
   - Define dedicated UE demodulation requirements for 16QAM in TDD NB-IoT in TS 36.101.
   - Define a BS conformance test (Test Model) for 16-QAM in TDD NB-IoT in TS 36.141.

Touching TDD, the table below illustrates the uplink-downlink configuration for TDD as available in long term evolution (LTE), where "D", "S", and "U" refer to "downlink subframe", "special subframe", and "uplink subframe" respectively. The duration of each of the subframes in the table is 1 ms.

| Subframe index | 0 | 1 | 2 | 3 | 4 | 5 | 6 | 7 | 8 | 9 |
|---|---|---|---|---|---|---|---|---|---|---|
| | | | | | | | | | | |

| Configuration | | | | | | | | | | |
|---|---|---|---|---|---|---|---|---|---|---|
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

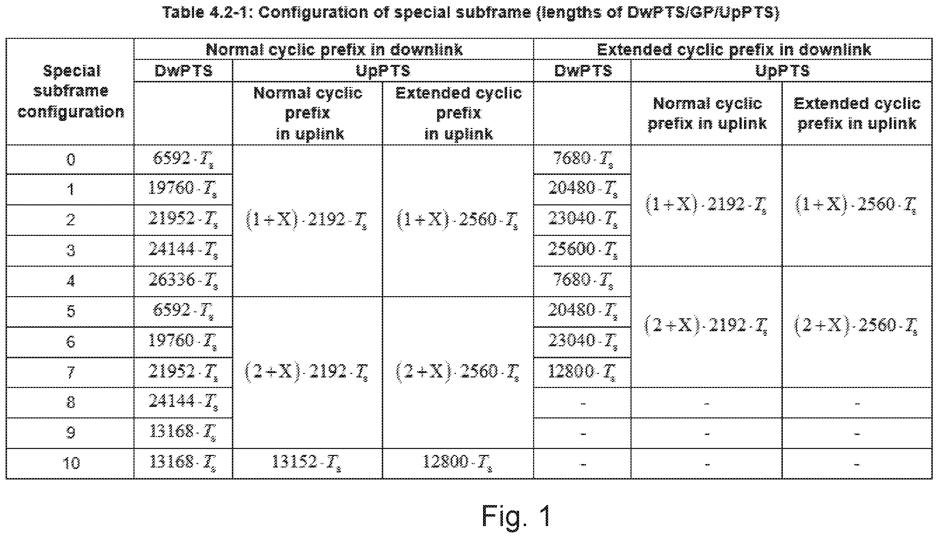

Moreover, the table shown in Figure 1 is from TS 36.211 [2] and describes the "Configuration of special subframe", where "DwPTS", "GP", and "UpPTS" refer to "Downlink Pilot Time Slot", "Guard Period", and "Uplink Pilot Time Slot", respectively.

Finally, for TDD NB-IoT, TS 36.211 [2] points out that the following restrictions apply:
- Uplink-downlink configuration 0 and 6 are not supported.
- UpPTS is not used for NPUSCH or NPRACH.
- DwPTS and UpPTS in special subframe configuration 10 is not used for transmissions.
- On an NB-IoT carrier for which higher-layer parameter *operationModeInfo* indicates *inband-SamePCI* or *inband-DifferentPCI,* or higher-layer parameter *inbandCarrierInfo* is present, or on an NB-IoT carrier for *SystemInformationBlockType1-NB* for which *sib1-carrierInfo* indicates *non-anchor* and the value of the higher layer parameter *sib-GuardbandInfo* is set to *sib-GuardbandInbandSamePCI* or *sib-GuardbandinbandDiffPCI,* DwPTS in special subframe configuration 0 and 5 for normal cyclic prefix is not used for NPDCCH and NPDSCH transmission.
- Higher-layer parameter *symbolBitmap* does not apply to special subframes.

Another prior art example is disclosed by US2019/239057.

### SUMMARY

A first aspect provides embodiments of a method by a network node, as in claim 1.

Corresponding embodiments of a network node are also provided.

A second aspect provides embodiments of a method by a UE, as in claim 5.

Corresponding embodiments of a UE are also provided.

### BRIEF DESCRIPTION OF THE DRAWINGS

Figure 1 shows table 4.2-1 from TS 36.211 [2].
Figure 2 shows a table with achievable code rates per special subframe configuration for stand-alone/guard-band deployments.
Figure 3 shows a table with number of bits for transmitting downlink data accounting for the resources given by a downlink subframe plus DwPTS in a special subframe, for stand-alone/guard-band deployments.
Figure 4 shows a table with achievable code rates accounting for the resources given by a downlink subframe plus DwPTS in a special subframe, for stand-alone/guard-band deployments.
Figure 5 shows a table with number of bits for transmitting downlink data in DwPTS per special subframe configuration, for in-band deployments.
Figure 6 shows a table with achievable code rates per special subframe configuration, for in-band deployments.
Figure 7 shows an example of a communication system in accordance with some embodiments.
Figure 8 shows a UE in accordance with some embodiments.
Figure 9 shows a network node in accordance with some embodiments.
Figure 10 is a block diagram of a host, in accordance with various aspects described herein.
Figure 11 is a block diagram illustrating a virtualization environment in which functions implemented by some embodiments may be virtualized.
Figure 12 shows a communication diagram of a host communicating via a network node with a UE over a partially wireless connection in accordance with some embodiments.

### DETAILED DESCRIPTION

There currently exist certain challenge(s). For example, as described above in the background section, the support of 16-QAM for NB-IoT in TDD operation has been found not to be transparent with respect to the FDD operation design, since the following impact has been highlighted:
The foreseen RAN1 impacts from supporting 16-QAM for TDD NB-IoT are:
- In legacy TDD NB-IoT, NPDSCH can be transmitted on DwPTS.
- For NPDSCH without repetition, rate matching is used for the Resource Element (RE) mapping into the special subframe.
- The RE mapping on special subframes including rate matching aspects would have to be discussed for supporting 16-QAM in TDD NB-IoT.

Certain aspects of the disclosure and their embodiments may provide solutions to these or other challenges. For example, methods and systems are provided for a rate-matching design for transmitting 16-QAM in downlink for TDD NB-IoT. More specifically, certain embodiments provide a RE mapping on special subframes including rate matching aspects for supporting 16-QAM in DL (i.e., narrowband physical downlink shared channel (NPDSCH) on DwPTS) in TDD NB-IoT, including all deployment modes (i.e., guard-band, stand-alone, and in-band deployments).

Certain embodiments may provide one or more of the following technical advantage(s). For example, certain embodiments may provide a technical advantage of allowing that NPDSCH without repetitions can be transmitted on DwPTS now with new higher order modulation introduced in Rel-17 (i.e., 16-QAM in DL for NB-IoT). Being able to transmit NPDSCH on DwPTS contributes to increase the peak data rate. Otherwise, such a DwPTS transmission would have to wait until the next available DL subframe in the corresponding TDD configuration.

As another example, certain embodiments may provide a technical advantage of accounting for all the applicable "special subframe configurations".

Other advantages may be readily apparent to one having skill in the art. Certain embodiments may have none, some, or all of the recited advantages.

Some of the embodiments contemplated herein will now be described more fully with reference to the accompanying drawings. Embodiments are provided by way of example to convey the scope of the subject matter to those skilled in the art. Additional information may also be found in the document(s) provided in the Appendix.

As used herein, 'node' can be a network node or a UE. Examples of network nodes are NodeB, base station (BS), multi-standard radio (MSR) radio node such as MSR BS, eNodeB (eNB), gNodeB (gNB), Master eNB (MeNB), Secondary eNB (SeNB), integrated access backhaul (IAB) node, network controller, radio network controller (RNC), base station controller (BSC), relay, donor node controlling relay, base transceiver station (BTS), Central Unit (e.g. in a gNB), Distributed Unit (e.g. in a gNB), Baseband Unit, Centralized Baseband, C-RAN, access point (AP), transmission points, transmission nodes, Remote Radio Unit (RRU), Remote Radio Head (RRH), nodes in distributed antenna system (DAS), core network node (e.g. Mobile Switching Center (MSC), Mobility Management Entity (MME), etc.), Operations & Maintenance (O&M), Operations Support System (OSS), Self Organizing Network (SON), positioning node (e.g. E-SMLC), etc.

Another example of a node is user equipment (UE), which is a non-limiting term and refers to any type of wireless device communicating with a network node and/or with another UE in a cellular or mobile communication system. Examples of UE are target device, device to device (D2D) UE, vehicular to vehicular (V2V), machine type UE, MTC UE or UE capable of machine to machine (M2M) communication, Personal Digital Assistant (PDA), Tablet, mobile terminals, smart phone, laptop embedded equipment (LEE), laptop mounted equipment (LME), Unified Serial Bus (USB) dongles, etc.

In some embodiments, generic terminology, "radio network node" or simply "network node (NW node)", is used. It can be any kind of network node which may comprise base station, radio base station, base transceiver station, base station controller, network controller, evolved Node B (eNB), Node B, gNodeB (gNB), relay node, access point, radio access point, Remote Radio Unit (RRU) Remote Radio Head (RRH), Central Unit (e.g. in a gNB), Distributed Unit (e.g. in a gNB), Baseband Unit, Centralized Baseband, C-RAN, access point (AP), etc.

The term radio access technology (RAT), may refer to any RAT such as, for example, Universal Terrestrial Radio Access Network (UTRA), Evolved Universal Terrestrial Radio Access Network (E-UTRA), narrow band internet of things (NB-IoT), WiFi, Bluetooth, next generation RAT, NR, 4G, 5G, etc. Any of the equipment denoted by the terms node, network node or radio network node may be capable of supporting a single or multiple RATs.

In 3GPP for the supporting of 16-QAM for NB-IoT in Rel-17, it has been of interest supporting this feature for both FDD and TDD operation as mentioned in the background section above. Nonetheless, from a physical layer perspective, the following impact preventing supporting TDD operation in a transparent manner has been found:
The foreseen RAN1 impacts from supporting 16-QAM for TDD NB-IoT are:
- In legacy TDD NB-IoT, NPDSCH can be transmitted on DwPTS.
- For NPDSCH without repetition, rate matching is used for the Resource Element (RE) mapping into the special subframe.
- The RE mapping on special subframes including rate matching aspects would have to be discussed for supporting 16-QAM in TDD NB-IoT.

As described above in the background section, Table 4.2-1 from TS 36.211 [2] describes the "Configuration of special subframe" and is shown in Figure 1. According to certain embodiments disclosed herein, that table may be used to perform the rate-matching design that will allow to transmit NPDSCH without repetitions on DwPTS for 16-QAM in TDD NB-IoT for Stand-alone/Guard-band and In-band deployments respectively.

The following definition in TS 36.211 is taken as a starting point: 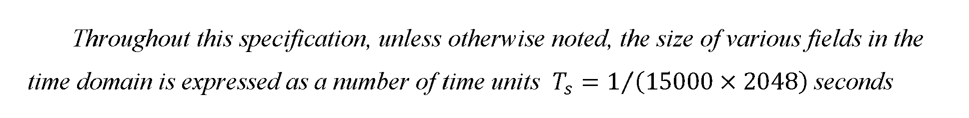 Throughout this specification, unless otherwise noted, the size of various fields in the time domain is expressed as a number of time units Ts = 1/(15000 × 2048) seconds

Based thereon, DwPTS for the "Normal cyclic prefix in downlink" is calculated in terms of both ms and orthogonal frequency division multiplexing (OFDM) symbols. Please note that we have accounted for the following *"DwPTS in special subframe configuration 0 and 5 for normal cyclic prefix is not used for NPDCCH and NPDSCH transmission"* (as indicated by strikethrough at the rows of those special subframe configurations in Table 1 below).

**Table 1: DwPTS for the "Normal cyclic prefix in downlink" expressed in ms and OFDM symbols**

| **Special subframe configuration** | **Normal cyclic prefix in downlink** | |
|---|---|---|
| | **DwPTS in ms** | **DwPTS in terms of OFDM symbols** |
| | | |
| | | |
| 1 | 0.6432 ms | 9 |
| 2 | 0.7146 ms | 10 |
| 3 | 0.7859 ms | 11 |
| 4 | 0.8573 ms | 12 |
| | | |
| 6 | 0.6432 ms | 9 |
| 7 | 0.7146 ms | 10 |
| 8 | 0.7859 ms | 11 |
| 9 | 0.4286 ms | 6 |

Once the DwPTS has been expressed in terms of OFDM symbols, in the subsections below the rate-matching analysis is performed for Stand-alone/Guard-band and In-band deployments, respectively.

### 1. Rate-matching design for transmitting NPDSCH without repetition on DwPTS for 16-QAM in DL for TDD-NB-IoT in Stand-alone/Guard-band deployments

Upon having expressed DwPTS in terms of OFDM symbols, we assume the presence of two narrowband reference signal (NRS) ports as to determine first the number of resource elements (REs) available for transmitting data, and thereafter we computed the number of bits available assuming that with 16-QAM there will be 4-bits per RE. For the symbol index values *l* apply for NRSs in special subframes, according to TS 36.211,
- $l = {N}_{symb}^{DL} - 5 , {N}_{symb}^{DL} - 4$ in each slot for special subframe configurations {3, 4, 8}
- $l = {N}_{symb}^{DL} - 5 , {N}_{symb}^{DL} - 4$ in the first slot for special subframe configurations {9, 10}
- $l = {N}_{symb}^{DL} - 2 , {N}_{symb}^{DL} - 1$ in the first slot for special subframe configurations {1, 2, 6, 7}.

It may be noted that 'DwPTS and UpPTS in special subframe configuration 10 is not used for transmissions. That is why in Table 2, which is depicted below, the indices span from 0 to 9, rather than from 0 to 10.

**Table 2: Number of bits for transmitting DL data in DwPTS per special subframe for stand-alone/guard-band deployments assuming the number of NRS ports is two.**

| **Special subframe configuration** | **Number of OFDM symbols in DwPTS** | **Symbol index for NRS** | **Number of REs for NPDSCH (GB/SA)** | **Number of bits for transmitting DL data in DwPTS per special subframe** |
|---|---|---|---|---|
| **0** | | Not be transmitted | - | - |
| **1** | 9 | *l* = 5,6 in the first slot | 100 | 400 |
| **2** | 10 | *l* = 5,6 in the first slot | 112 | 448 |
| **3** | 11 | *l* = 2,3 in both slots | 116 | 464 |
| **4** | 12 | *l* = 2,3 in both slots | 128 | 512 |
| **5** | | Not be transmitted | - | - |
| **6** | 9 | *l* = 5,6 in the first slot | 100 | 400 |
| **7** | 10 | *l* = 5,6 in the first slot | 112 | 448 |
| **8** | 11 | *l* = 2,3 in both slots | 116 | 464 |
| **9** | 6 | *l* = 2,3 in the first slot | 64 | 256 |

Afterwards, the code rate for a given TBS (assuming a cyclic redundancy check (CRC) of 24 bits) is computed so as to know whether such a TBS is suitable to be transmitted on DwPTS. For example, the coordinate given by I_{TBS} = 14 and I_{SF} = 0 refers to TBS = 256, for which we computed the achievable code rate for special subframe configuration# 1 as follows: Achievable code rate for specialsubframeconfiguration#1 = (CRC+TBS)/ (Number of bits for transmitting DL data in DwPTS per special subframe) = (24+256)/400 = 0.7000.

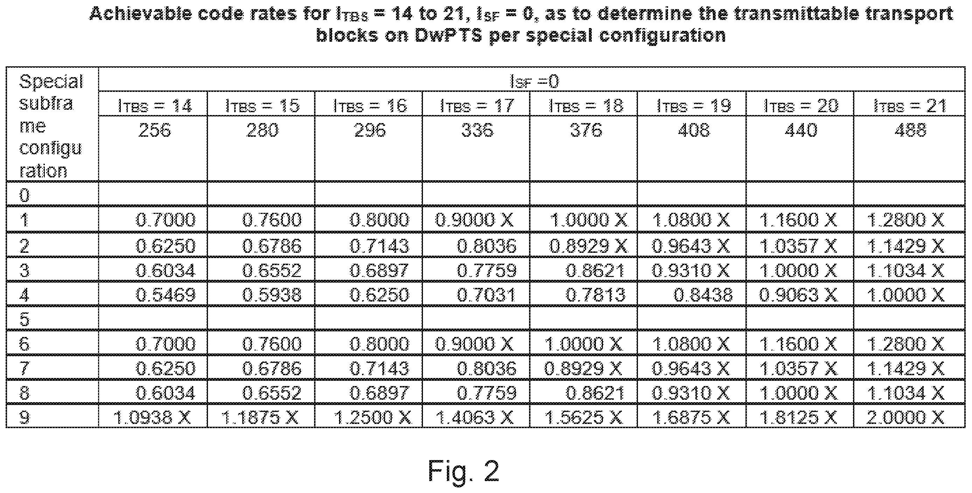

The table shown in Figure 2 includes code rate estimates for all the Transport Block indices (I_{TBS} = 14 to 21) and, because of illustration purposes, only for subframe index zero (i.e., I_{SF} = 0, from among the entire range I_{SF} = 0 to 7). In Figure 2, the entries in the table where the code rate is above 1, or below 1 but close to 1, are indicated by the label X.

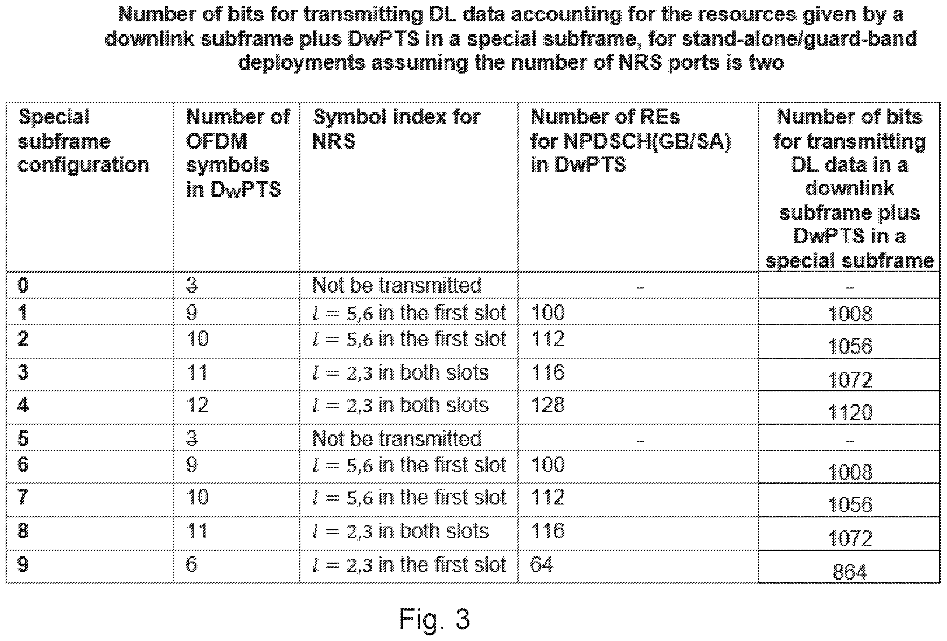

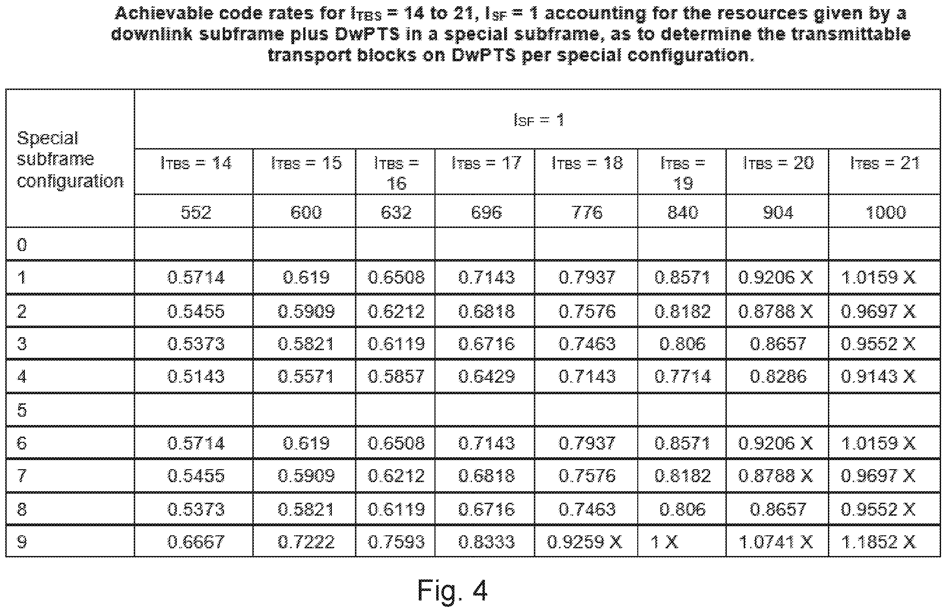

Based on the above analysis for the support of 16-QAM in TDD NB-IoT, and the mapping NPDSCH (without repetitions) on DwPTS for Stand-alone/Guard-band deployments:
- In a particular embodiment, following the legacy specification the special subframe configurations # 0 and 5 are not used, and on top of it the special subframe configuration #9 is not used since it is not suitable either (i.e., the achievable code rate goes beyond 1, as shown in Figure 2).
- In a particular embodiment, for I_{SF} = 0 only the entries in Figure 2 without the label X are suitable to be used for mapping a 16-QAM's TBS on DwPTS as to keep the achievable code rate <= ~0.86.
- In a particular embodiment, the achievable code rate used to determine the transmittable transport blocks on DwPTS can be different than ~0.86 (for example it can be smaller or even slightly higher but always less than 1).
- In a particular embodiment for subframe indices other than I_{SF} = 0 (i.e., I_{SF} = 1 to 7), the same fundamental design principle applies.
- In a particular embodiment, the same fundamental design principles apply when the number of NRS is different than two, in which case there will be less resources available for transmitting DL data.
- In a particular embodiment, the design principle is applicable to scenarios where NPDSCH is mapped not only on the special subframe, but over a "DL subframe(s) + special subframe(s)". In the tables in Figures 3 and 4, we provide an example using in this case I_{SF} = 1. In Figure 4, the entries in the table where the code rate is above 1, or below 1 but close to 1, are indicated by the label X.

In a particular embodiment, for I_{SF} = 1 only the entries in Figure 3 without the label X are suitable to be used for mapping a 16-QAM's TBS on subframes contain DwPTS as to keep the achievable code rate <= ~0.86.

In a further particular embodiment, the achievable code rate used to determine the transmittable transport blocks on DwPTS can be different than ~0.86 (for example, it can be smaller or even slightly higher but always less than 1).

### 2. Rate-matching design for transmitting NPDSCH without repetition on DwPTS for 16-QAM in DL for TDD-NB-IoT in In-band deployments

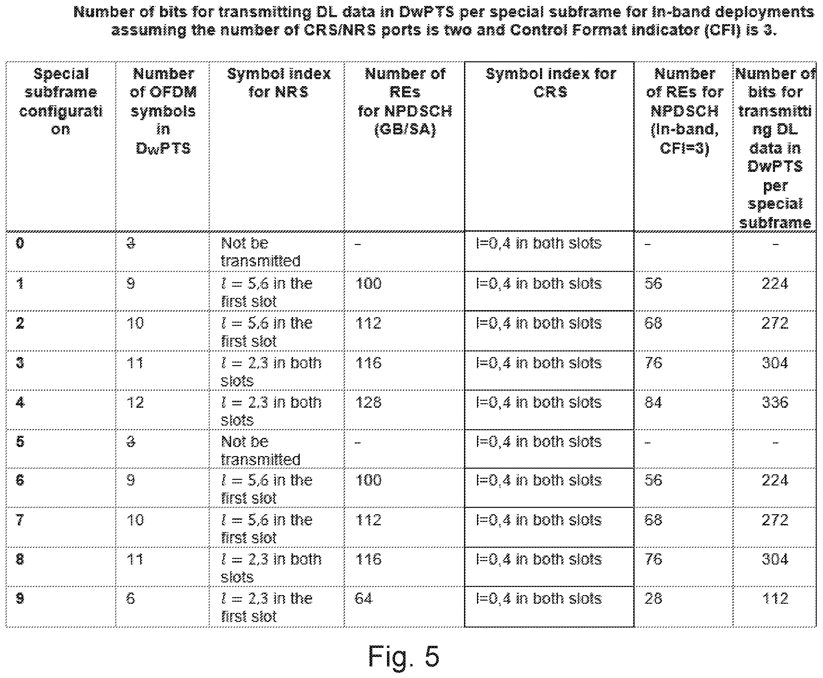

For In-band deployments, we additionally need to consider the presence of cell-specific reference signal (CRS) ports. Thus, when we assume the number of CRS/NRS ports is 2 we have the table shown in Figure 5.

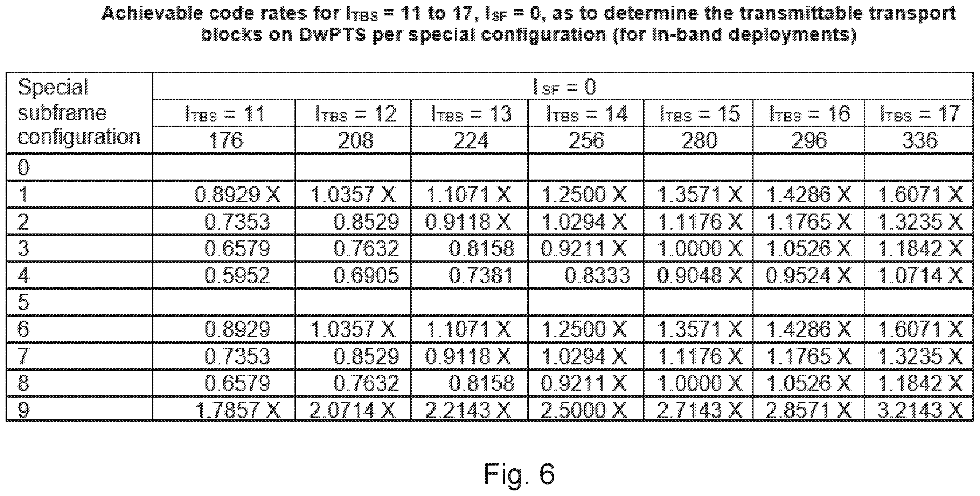

The table in Figure 6 includes code rate estimates for all the Transport Block indices (I_{TBS} = 11 to 17) and, because of illustration purposes, only for subframe index zero (i.e., I_{SF} = 0, from among the entire range I_{SF} = 0 to 7).

Based on the above analysis for the support of 16-QAM in TDD NB-IoT, and the mapping NPDSCH (without repetitions) on DwPTS for In-band deployments:
- In a particular embodiment, following the legacy specification the special subframe configurations # 0 and 5 are not used, and on top of it the special configuration #9 is not used since it is not suitable either (i.e., the achievable code rate goes beyond 1, as shown in Figure 6).
- In a particular embodiment, for I_{SF} = 0 only the entries in Figure 6 without the label X are suitable to be used for mapping a 16-QAM's TBS on DwPTS as to keep the achievable code rate <= ~0.83.
- In a particular embodiment, the achievable code rate used to determine the transmittable transport blocks on DwPTS can be different than ~0.83 (for example, it can be smaller or even slightly higher but always less than 1).
- In a particular embodiment for subframe indices other than I_{SF} = 0 (i.e., I_{SF} = 1 to 7), the same fundamental design principle applies.
- In a particular embodiment, the same fundamental design principles apply when the number of NRS or CRS is different than two and/or any other assumption on the control format indicator (CFI), in which case there will be different resources available for transmitting DL data.
- In a particular embodiment, the design principle is applicable to scenarios where NPDSCH is mapped not only on the special subframe, but over a "DL subframe(s) + special subframe(s)".

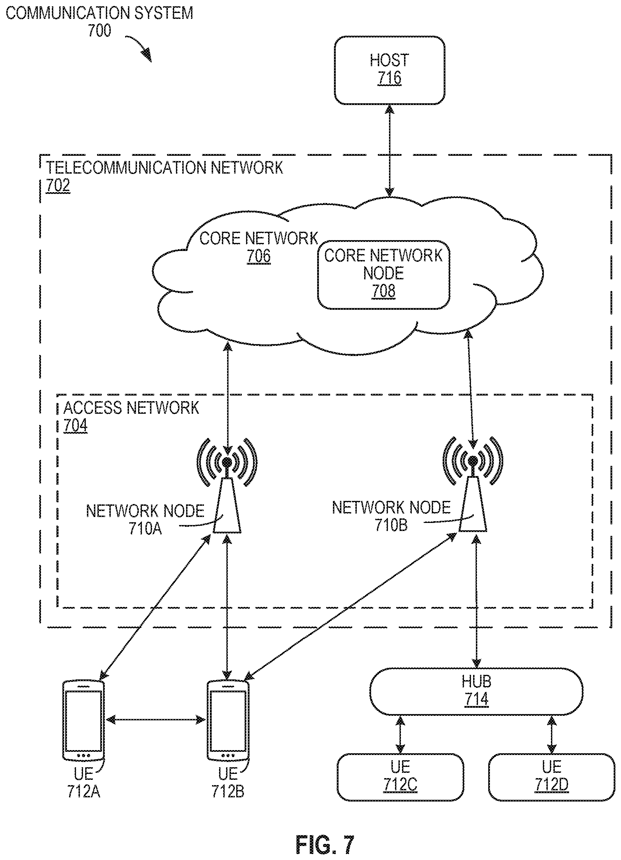

FIGURE 7 shows an example of a communication system 700 in accordance with some embodiments.

In the example, the communication system 700 includes a telecommunication network 702 that includes an access network 704, such as a radio access network (RAN), and a core network 706, which includes one or more core network nodes 708. The access network 704 includes one or more access network nodes, such as network nodes 710a and 710b (one or more of which may be generally referred to as network nodes 710), or any other similar 3^{rd} Generation Partnership Project (3GPP) access node or non-3GPP access point. The network nodes 710 facilitate direct or indirect connection of user equipment (UE), such as by connecting UEs 712a, 712b, 712c, and 712d (one or more of which may be generally referred to as UEs 712) to the core network 706 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 700 may include any number of wired or wireless networks, network nodes, UEs, and/or any other components or systems that may facilitate or participate in the communication of data and/or signals whether via wired or wireless connections. The communication system 700 may include and/or interface with any type of communication, telecommunication, data, cellular, radio network, and/or other similar type of system.

The UEs 712 may be any of a wide variety of communication devices, including wireless devices arranged, configured, and/or operable to communicate wirelessly with the network nodes 710 and other communication devices. Similarly, the network nodes 710 are arranged, capable, configured, and/or operable to communicate directly or indirectly with the UEs 712 and/or with other network nodes or equipment in the telecommunication network 702 to enable and/or provide network access, such as wireless network access, and/or to perform other functions, such as administration in the telecommunication network 702.

In the depicted example, the core network 706 connects the network nodes 710 to one or more hosts, such as host 716. These connections may be direct or indirect via one or more intermediary networks or devices. In other examples, network nodes may be directly coupled to hosts. The core network 706 includes one more core network nodes (e.g., core network node 708) that are structured with hardware and software components. Features of these components may be substantially similar to those described with respect to the UEs, network nodes, and/or hosts, such that the descriptions thereof are generally applicable to the corresponding components of the core network node 708. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 716 may be under the ownership or control of a service provider other than an operator or provider of the access network 704 and/or the telecommunication network 702, and may be operated by the service provider or on behalf of the service provider. The host 716 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 700 of FIGURE 7 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 702 is a cellular network that implements 3GPP standardized features. Accordingly, the telecommunications network 702 may support network slicing to provide different logical networks to different devices that are connected to the telecommunication network 702. For example, the telecommunications network 702 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 712 are configured to transmit and/or receive information without direct human interaction. For instance, a UE may be designed to transmit information to the access network 704 on a predetermined schedule, when triggered by an internal or external event, or in response to requests from the access network 704. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 714 communicates with the access network 704 to facilitate indirect communication between one or more UEs (e.g., UE 712c and/or 712d) and network nodes (e.g., network node 710b). In some examples, the hub 714 may be a controller, router, content source and analytics, or any of the other communication devices described herein regarding UEs. For example, the hub 714 may be a broadband router enabling access to the core network 706 for the UEs. As another example, the hub 714 may be a controller that sends commands or instructions to one or more actuators in the UEs. Commands or instructions may be received from the UEs, network nodes 710, or by executable code, script, process, or other instructions in the hub 714. As another example, the hub 714 may be a data collector that acts as temporary storage for UE data and, in some embodiments, may perform analysis or other processing of the data. As another example, the hub 714 may be a content source. For example, for a UE that is a VR headset, display, loudspeaker or other media delivery device, the hub 714 may retrieve VR assets, video, audio, or other media or data related to sensory information via a network node, which the hub 714 then provides to the UE either directly, after performing local processing, and/or after adding additional local content. In still another example, the hub 714 acts as a proxy server or orchestrator for the UEs, in particular in if one or more of the UEs are low energy IoT devices.

The hub 714 may have a constant/persistent or intermittent connection to the network node 710b. The hub 714 may also allow for a different communication scheme and/or schedule between the hub 714 and UEs (e.g., UE 712c and/or 712d), and between the hub 714 and the core network 706. In other examples, the hub 714 is connected to the core network 706 and/or one or more UEs via a wired connection. Moreover, the hub 714 may be configured to connect to an M2M service provider over the access network 704 and/or to another UE over a direct connection. In some scenarios, UEs may establish a wireless connection with the network nodes 710 while still connected via the hub 714 via a wired or wireless connection. In some embodiments, the hub 714 may be a dedicated hub - that is, a hub whose primary function is to route communications to/from the UEs from/to the network node 710b. In other embodiments, the hub 714 may be a nondedicated hub - that is, a device which is capable of operating to route communications between the UEs and network node 710b, but which is additionally capable of operating as a communication start and/or end point for certain data channels.

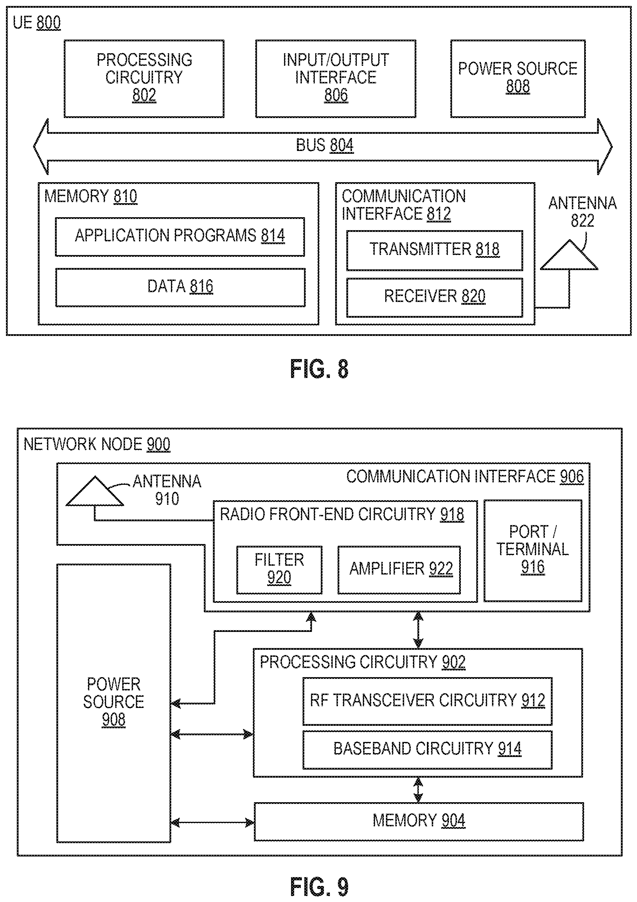

FIGURE 8 shows a UE 800 in accordance with some embodiments.

As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 800 includes processing circuitry 802 that is operatively coupled via a bus 804 to an input/output interface 806, a power source 808, a memory 810, a communication interface 812, and/or any other component, or any combination thereof. Certain UEs may utilize all or a subset of the components shown in FIGURE 8. The level of integration between the components may vary from one UE to another UE. Further, certain UEs may contain multiple instances of a component, such as multiple processors, memories, transceivers, transmitters, receivers, etc.

The processing circuitry 802 is configured to process instructions and data and may be configured to implement any sequential state machine operative to execute instructions stored as machine-readable computer programs in the memory 810. The processing circuitry 802 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 802 may include multiple central processing units (CPUs).

In the example, the input/output interface 806 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 800. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 808 is structured as a battery or battery pack. Other types of power sources, such as an external power source (e.g., an electricity outlet), photovoltaic device, or power cell, may be used. The power source 808 may further include power circuitry for delivering power from the power source 808 itself, and/or an external power source, to the various parts of the UE 800 via input circuitry or an interface such as an electrical power cable. Delivering power may be, for example, for charging of the power source 808. Power circuitry may perform any formatting, converting, or other modification to the power from the power source 808 to make the power suitable for the respective components of the UE 800 to which power is supplied.

The memory 810 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 810 includes one or more application programs 814, such as an operating system, web browser application, a widget, gadget engine, or other application, and corresponding data 816. The memory 810 may store, for use by the UE 800, any of a variety of various operating systems or combinations of operating systems.

The memory 810 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 810 may allow the UE 800 to access instructions, application programs and the like, stored on transitory or non-transitory memory media, to off-load data, or to upload data. An article of manufacture, such as one utilizing a communication system may be tangibly embodied as or in the memory 810, which may be or comprise a device-readable storage medium.

The processing circuitry 802 may be configured to communicate with an access network or other network using the communication interface 812. The communication interface 812 may comprise one or more communication subsystems and may include or be communicatively coupled to an antenna 822. The communication interface 812 may include one or more transceivers used to communicate, such as by communicating with one or more remote transceivers of another device capable of wireless communication (e.g., another UE or a network node in an access network). Each transceiver may include a transmitter 818 and/or a receiver 820 appropriate to provide network communications (e.g., optical, electrical, frequency allocations, and so forth). Moreover, the transmitter 818 and receiver 820 may be coupled to one or more antennas (e.g., antenna 822) and may share circuit components, software or firmware, or alternatively be implemented separately.

In the illustrated embodiment, communication functions of the communication interface 812 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 812, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 800 shown in FIGURE 8.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

FIGURE 9 shows a network node 900 in accordance with some embodiments.

As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 900 includes a processing circuitry 902, a memory 904, a communication interface 906, and a power source 908. The network node 900 may be composed of multiple physically separate components (e.g., a NodeB component and a RNC component, or a BTS component and a BSC component, etc.), which may each have their own respective components. In certain scenarios in which the network node 900 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 900 may be configured to support multiple radio access technologies (RATs). In such embodiments, some components may be duplicated (e.g., separate memory 904 for different RATs) and some components may be reused (e.g., a same antenna 910 may be shared by different RATs). The network node 900 may also include multiple sets of the various illustrated components for different wireless technologies integrated into network node 900, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 900.

The processing circuitry 902 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 900 components, such as the memory 904, to provide network node 900 functionality.

In some embodiments, the processing circuitry 902 includes a system on a chip (SOC). In some embodiments, the processing circuitry 902 includes one or more of radio frequency (RF) transceiver circuitry 912 and baseband processing circuitry 914. In some embodiments, the radio frequency (RF) transceiver circuitry 912 and the baseband processing circuitry 914 may be on separate chips (or sets of chips), boards, or units, such as radio units and digital units. In alternative embodiments, part or all of RF transceiver circuitry 912 and baseband processing circuitry 914 may be on the same chip or set of chips, boards, or units.

The memory 904 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 902. The memory 904 may store any suitable instructions, data, or information, including a computer program, software, an application including one or more of logic, rules, code, tables, and/or other instructions capable of being executed by the processing circuitry 902 and utilized by the network node 900. The memory 904 may be used to store any calculations made by the processing circuitry 902 and/or any data received via the communication interface 906. In some embodiments, the processing circuitry 902 and memory 904 is integrated.

The communication interface 906 is used in wired or wireless communication of signaling and/or data between a network node, access network, and/or UE. As illustrated, the communication interface 906 comprises port(s)/terminal(s) 916 to send and receive data, for example to and from a network over a wired connection. The communication interface 906 also includes radio front-end circuitry 918 that may be coupled to, or in certain embodiments a part of, the antenna 910. Radio front-end circuitry 918 comprises filters 920 and amplifiers 922. The radio front-end circuitry 918 may be connected to an antenna 910 and processing circuitry 902. The radio front-end circuitry may be configured to condition signals communicated between antenna 910 and processing circuitry 902. The radio front-end circuitry 918 may receive digital data that is to be sent out to other network nodes or UEs via a wireless connection. The radio front-end circuitry 918 may convert the digital data into a radio signal having the appropriate channel and bandwidth parameters using a combination of filters 920 and/or amplifiers 922. The radio signal may then be transmitted via the antenna 910. Similarly, when receiving data, the antenna 910 may collect radio signals which are then converted into digital data by the radio front-end circuitry 918. The digital data may be passed to the processing circuitry 902. In other embodiments, the communication interface may comprise different components and/or different combinations of components.

In certain alternative embodiments, the network node 900 does not include separate radio front-end circuitry 918, instead, the processing circuitry 902 includes radio front-end circuitry and is connected to the antenna 910. Similarly, in some embodiments, all or some of the RF transceiver circuitry 912 is part of the communication interface 906. In still other embodiments, the communication interface 906 includes one or more ports or terminals 916, the radio front-end circuitry 918, and the RF transceiver circuitry 912, as part of a radio unit (not shown), and the communication interface 906 communicates with the baseband processing circuitry 914, which is part of a digital unit (not shown).

The antenna 910 may include one or more antennas, or antenna arrays, configured to send and/or receive wireless signals. The antenna 910 may be coupled to the radio front-end circuitry 918 and may be any type of antenna capable of transmitting and receiving data and/or signals wirelessly. In certain embodiments, the antenna 910 is separate from the network node 900 and connectable to the network node 900 through an interface or port.

The antenna 910, communication interface 906, and/or the processing circuitry 902 may be configured to perform any receiving operations and/or certain obtaining operations described herein as being performed by the network node. Any information, data and/or signals may be received from a UE, another network node and/or any other network equipment. Similarly, the antenna 910, the communication interface 906, and/or the processing circuitry 902 may be configured to perform any transmitting operations described herein as being performed by the network node. Any information, data and/or signals may be transmitted to a UE, another network node and/or any other network equipment.

The power source 908 provides power to the various components of network node 900 in a form suitable for the respective components (e.g., at a voltage and current level needed for each respective component). The power source 908 may further comprise, or be coupled to, power management circuitry to supply the components of the network node 900 with power for performing the functionality described herein. For example, the network node 900 may be connectable to an external power source (e.g., the power grid, an electricity outlet) via an input circuitry or interface such as an electrical cable, whereby the external power source supplies power to power circuitry of the power source 908. As a further example, the power source 908 may comprise a source of power in the form of a battery or battery pack which is connected to, or integrated in, power circuitry. The battery may provide backup power should the external power source fail.

Embodiments of the network node 900 may include additional components beyond those shown in FIGURE 9 for providing certain aspects of the network node's functionality, including any of the functionality described herein and/or any functionality necessary to support the subject matter described herein. For example, the network node 900 may include user interface equipment to allow input of information into the network node 900 and to allow output of information from the network node 900. This may allow a user to perform diagnostic, maintenance, repair, and other administrative functions for the network node 900.

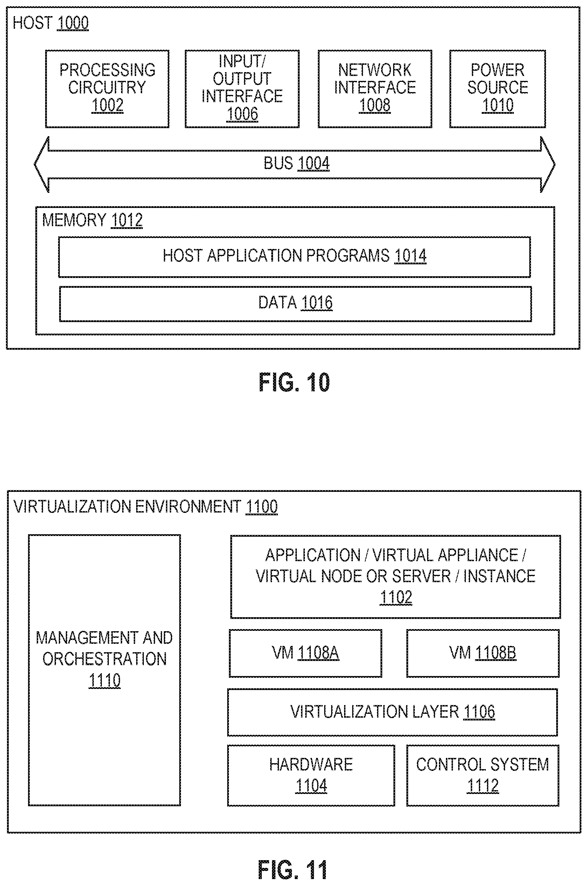

FIGURE 10 is a block diagram of a host 1000, which may be an embodiment of the host 716 of FIGURE 7, in accordance with various aspects described herein.

As used herein, the host 1000 may be or comprise various combinations hardware and/or software, including a standalone server, a blade server, a cloud-implemented server, a distributed server, a virtual machine, container, or processing resources in a server farm. The host 1000 may provide one or more services to one or more UEs.

The host 1000 includes processing circuitry 1002 that is operatively coupled via a bus 1004 to an input/output interface 1006, a network interface 1008, a power source 1010, and a memory 1012. Other components may be included in other embodiments. Features of these components may be substantially similar to those described with respect to the devices of previous figures, such as Figures 8 and 9, such that the descriptions thereof are generally applicable to the corresponding components of host 1000.

The memory 1012 may include one or more computer programs including one or more host application programs 1014 and data 1016, which may include user data, e.g., data generated by a UE for the host 1000 or data generated by the host 1000 for a UE. Embodiments of the host 1000 may utilize only a subset or all of the components shown. The host application programs 1014 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1014 may also provide for user authentication and licensing checks and may periodically report health, routes, and content availability to a central node, such as a device in or on the edge of a core network. Accordingly, the host 1000 may select and/or indicate a different host for over-the-top services for a UE. The host application programs 1014 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

FIGURE 11 is a block diagram illustrating a virtualization environment 1100 in which functions implemented by some embodiments may be virtualized.

In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1100 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1102 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1104 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1106 (also referred to as hypervisors or virtual machine monitors (VMMs)), provide VMs 1108a and 1108b (one or more of which may be generally referred to as VMs 1108), and/or perform any of the functions, features and/or benefits described in relation with some embodiments described herein. The virtualization layer 1106 may present a virtual operating platform that appears like networking hardware to the VMs 1108.

The VMs 1108 comprise virtual processing, virtual memory, virtual networking or interface and virtual storage, and may be run by a corresponding virtualization layer 1106. Different embodiments of the instance of a virtual appliance 1102 may be implemented on one or more of VMs 1108, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1108 may be a software implementation of a physical machine that runs programs as if they were executing on a physical, non-virtualized machine. Each of the VMs 1108, and that part of hardware 1104 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1108 on top of the hardware 1104 and corresponds to the application 1102.

Hardware 1104 may be implemented in a standalone network node with generic or specific components. Hardware 1104 may implement some functions via virtualization. Alternatively, hardware 1104 may be part of a larger cluster of hardware (e.g. such as in a data center or CPE) where many hardware nodes work together and are managed via management and orchestration 1110, which, among others, oversees lifecycle management of applications 1102. In some embodiments, hardware 1104 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1112 which may alternatively be used for communication between hardware nodes and radio units.

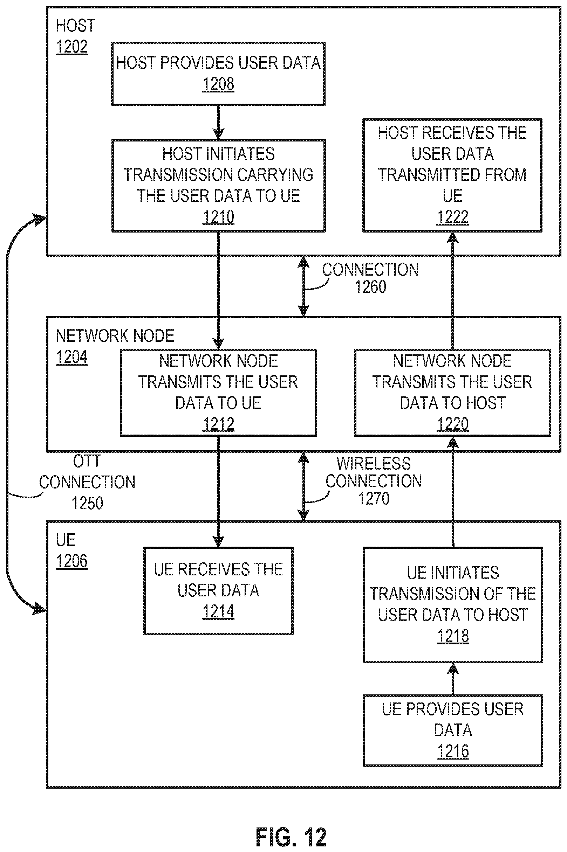

FIGURE 12 shows a communication diagram of a host 1202 communicating via a network node 1204 with a UE 1206 over a partially wireless connection in accordance with some embodiments.

Example implementations, in accordance with various embodiments, of the UE (such as a UE 712a of FIGURE 7 and/or UE 800 of FIGURE 8), network node (such as network node 710a of FIGURE 7 and/or network node 900 of FIGURE 9), and host (such as host 716 of FIGURE 7 and/or host 1000 of FIGURE 10) discussed in the preceding paragraphs will now be described with reference to FIGURE 12.

Like host 1000, embodiments of host 1202 include hardware, such as a communication interface, processing circuitry, and memory. The host 1202 also includes software, which is stored in or accessible by the host 1202 and executable by the processing circuitry. The software includes a host application that may be operable to provide a service to a remote user, such as the UE 1206 connecting via an over-the-top (OTT) connection 1250 extending between the UE 1206 and host 1202. In providing the service to the remote user, a host application may provide user data which is transmitted using the OTT connection 1250.

The network node 1204 includes hardware enabling it to communicate with the host 1202 and UE 1206. The connection 1260 may be direct or pass through a core network (like core network 706 of FIGURE 7) and/or one or more other intermediate networks, such as one or more public, private, or hosted networks. For example, an intermediate network may be a backbone network or the Internet.

The UE 1206 includes hardware and software, which is stored in or accessible by UE 1206 and executable by the UE's processing circuitry. The software includes a client application, such as a web browser or operator-specific "app" that may be operable to provide a service to a human or non-human user via UE 1206 with the support of the host 1202. In the host 1202, an executing host application may communicate with the executing client application via the OTT connection 1250 terminating at the UE 1206 and host 1202. In providing the service to the user, the UE's client application may receive request data from the host's host application and provide user data in response to the request data. The OTT connection 1250 may transfer both the request data and the user data. The UE's client application may interact with the user to generate the user data that it provides to the host application through the OTT connection 1250.

The OTT connection 1250 may extend via a connection 1260 between the host 1202 and the network node 1204 and via a wireless connection 1270 between the network node 1204 and the UE 1206 to provide the connection between the host 1202 and the UE 1206. The connection 1260 and wireless connection 1270, over which the OTT connection 1250 may be provided, have been drawn abstractly to illustrate the communication between the host 1202 and the UE 1206 via the network node 1204, without explicit reference to any intermediary devices and the precise routing of messages via these devices.

As an example of transmitting data via the OTT connection 1250, in step 1208, the host 1202 provides user data, which may be performed by executing a host application. In some embodiments, the user data is associated with a particular human user interacting with the UE 1206. In other embodiments, the user data is associated with a UE 1206 that shares data with the host 1202 without explicit human interaction. In step 1210, the host 1202 initiates a transmission carrying the user data towards the UE 1206. The host 1202 may initiate the transmission responsive to a request transmitted by the UE 1206. The request may be caused by human interaction with the UE 1206 or by operation of the client application executing on the UE 1206. The transmission may pass via the network node 1204, in accordance with the teachings of the embodiments described throughout this disclosure. Accordingly, in step 1212, the network node 1204 transmits to the UE 1206 the user data that was carried in the transmission that the host 1202 initiated, in accordance with the teachings of the embodiments described throughout this disclosure. In step 1214, the UE 1206 receives the user data carried in the transmission, which may be performed by a client application executed on the UE 1206 associated with the host application executed by the host 1202.

In some examples, the UE 1206 executes a client application which provides user data to the host 1202. The user data may be provided in reaction or response to the data received from the host 1202. Accordingly, in step 1216, the UE 1206 may provide user data, which may be performed by executing the client application. In providing the user data, the client application may further consider user input received from the user via an input/output interface of the UE 1206. Regardless of the specific manner in which the user data was provided, the UE 1206 initiates, in step 1218, transmission of the user data towards the host 1202 via the network node 1204. In step 1220, in accordance with the teachings of the embodiments described throughout this disclosure, the network node 1204 receives user data from the UE 1206 and initiates transmission of the received user data towards the host 1202. In step 1222, the host 1202 receives the user data carried in the transmission initiated by the UE 1206.

One or more of the various embodiments improve the performance of OTT services provided to the UE 1206 using the OTT connection 1250, in which the wireless connection 1270 forms the last segment. More precisely, the teachings of these embodiments may improve one or more of, for example, data rate, latency, and/or power consumption and, thereby, provide benefits such as, for example, reduced user waiting time, relaxed restriction on file size, improved content resolution, better responsiveness, and/or extended battery lifetime.

In an example scenario, factory status information may be collected and analyzed by the host 1202. As another example, the host 1202 may process audio and video data which may have been retrieved from a UE for use in creating maps. As another example, the host 1202 may collect and analyze real-time data to assist in controlling vehicle congestion (e.g., controlling traffic lights). As another example, the host 1202 may store surveillance video uploaded by a UE. As another example, the host 1202 may store or control access to media content such as video, audio, VR or AR which it can broadcast, multicast or unicast to UEs. As other examples, the host 1202 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1250 between the host 1202 and UE 1206, in response to variations in the measurement results. The measurement procedure and/or the network functionality for reconfiguring the OTT connection may be implemented in software and hardware of the host 1202 and/or UE 1206. In some embodiments, sensors (not shown) may be deployed in or in association with other devices through which the OTT connection 1250 passes; the sensors may participate in the measurement procedure by supplying values of the monitored quantities exemplified above, or supplying values of other physical quantities from which software may compute or estimate the monitored quantities. The reconfiguring of the OTT connection 1250 may include message format, retransmission settings, preferred routing etc.; the reconfiguring need not directly alter the operation of the network node 1204. Such procedures and functionalities may be known and practiced in the art. In certain embodiments, measurements may involve proprietary UE signaling that facilitates measurements of throughput, propagation times, latency and the like, by the host 1202. The measurements may be implemented in that software causes messages to be transmitted, in particular empty or 'dummy' messages, using the OTT connection 1250 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 16-QAM: 16-Quadrature Amplitude Modulaiton
- 3GPP: 3rd Generation Partnership Project
- 5G: 5th Generation
- 5GC: 5G Core
- 5GS: 5G System
- 5QI: 5G QoS Identifier
- 6G: 6^{th} Generation
- ABS: Almost Blank Subframe
- AN: Access Network
- AN: Access Node
- ANR: Automatic Neighbor Relations
- AP: Access Point
- ARQ: Automatic Repeat Request
- AS: Access Stratum
- AWGN: Additive White Gaussian Noise
- BCCH: Broadcast Control Channel
- BCH: Broadcast Channel
- BLER: Block Error Rate
- bps: Bits per second
- BS: Base Station
- BSC: Base Station Controller
- BTS: Base Transceiver Station
- CA: Carrier Aggregation
- CB: Contention-Based
- CBRA: Contention-Based Random Access
- CC: Carrier Component
- CCCH SDU: Common Control Channel SDU
- CDM: Code Division Multiplexing
- CDMA: Code Division Multiplexing Access
- CE: Control Element
- CF: Contention-Free
- CFI: Control Format Indicator
- CFRA: Contention-Free Random Access
- CG: Cell Group
- CGI: Cell Global Identifier/Identity
- CIR: Channel Impulse Response
- CN: Core Network
- CP: Cyclic Prefix
- CPICH: Common Pilot Channel
- CPICH: Ec/No CPICH Received energy per chip divided by the power density in the band
- CQI: Channel Quality information
- C-RNTI: Cell RNTI
- CRC: Cyclic Redundancy Check
- CRM: Contention Resolution Message
- CRS: Cell-Specific Reference Signal
- C-RNTI: Cell RNTI
- CSI: Channel State Information
- CSI-RS: Channel State Information Reference Signal
- DCCH: Dedicated Control Channel
- DCI: Downlink Control Information
- DL: Downlink
- DL-SCH: Downlink Shared Channel
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- DwPTS: Downlink Pilot Time Slot
- EARFCN: Evolved Absolute Radio Frequency Channel Number
- E-CID: Enhanced Cell-ID (positioning method)
- ECGI: Evolved CGI
- E-SMLC: Evolved-Serving Mobile Location Centre
- ECGI: Evolved CGI
- eMBB: Enhanced Mobile Broadband
- eMBMS: evolved Multimedia Broadcast Multicast Services
- eMTC: Enhanced Machine Type Communication
- eNB: E-UTRAN NodeB/eNodeB
- ePDCCH: enhanced Physical Downlink Control Channel
- EPC: Evolved Packet Core
- EPS: Evolved Packet System
- E-UTRA: Evolved UTRA
- E-UTRAN: Evolved Universal Terrestrial Radio Access Network
- FDD: Frequency Division Duplex
- FDM: Frequency Division Multiplexing
- FFS: For Further Study
- FR: Frequency Range
- GERAN: GSM EDGE Radio Access Network
- GEO: Geostationary Earth Orbit
- GHz: Gigahertz
- GLONASS: Global Navigation Satellite System
- gNB: gNode B (a base station in NR; a Node B supporting NR and connectivity to NGC)
- GNSS: Global Navigation Satellite System
- GP: Guard Period
- GPS: Global Positioning System
- GSM: Global System for Mobile communication
- GW: Gateway
- HAPS: High Altitude Platform System/ High Altitude Platform Station
- HARQ: Hybrid Automatic Repeat Request
- HO: Handover
- HSPA: High Speed Packet Access
- HRPD: High Rate Packet Data
- Hz: Hertz
- ID: Identity/Identifier
- IoT: Internet of Things
- I_{SF}: Subframe Index
- I_{TBS}: Transport Block Index
- kHz: Kilohertz
- LEO: Low Earth Orbit
- LOS: Line of Sight
- LPP: LTE Positioning Protocol
- LTE: Long-Term Evolution
- LTE-M: LTE-Machine Type Communication
- LSB: Least Significant Bit
- M2M: Machine to Machine
- MAC: Medium Access Control
- MAC CE: MAC Control Element
- MBB: Mobile Broadband
- MBMS: Multimedia Broadcast Multicast Services
- MBSFN: Multimedia Broadcast multicast service Single Frequency Network
- MBSFN ABS: MBSFN Almost Blank Subframe
- MCS: Modulation and Coding Scheme
- MDT: Minimization of Drive Tests
- MEO: Medium Earth Orbit
- µs: Microsecond
- MIB: Master Information Block
- MME: Mobility Management Entity
- mMTC: Massive Machine Type Communication
- MRTD: Maximum Receive Timing Difference
- ms: Millisecond
- MSB: Most Significant Bit
- MSC: Mobile Switching Center
- Msg: Message
- Msg1: Message 1
- Msg2: Message 2
- Msg3: Message 3
- Msg4: Message 4
- Msg5: Message 5
- MsgA: Message A
- MsgB: Message B
- MTC: Machine Type Communication
- NB-IoT: Narrowband Internet of Things
- NG: The interface between the RAN and the core network in 5G/NR
- NGC: Next Generation Core
- NGc: The control plane part of NG
- NGu: The user plane part of NG
- NPDCCH: Narrowband Physical Downlink Control Channel
- NR: New Radio
- NRS: Narrowband Reference Signal
- NTN: Non-Terrestrial Network
- OCNG: OFDMA Channel Noise Generator
- OFDM: Orthogonal Frequency Division Multiplexing
- OFDMA: Orthogonal Frequency Division Multiple Access
- OSI: Other System Information
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PCH: Paging Channel
- PCI: Physical Cell Identity/Identifier
- PDCCH: Physical Downlink Control Channel
- PDCP: Packet Data Convergence Protocol
- PDP: Profile Delay Profile
- PDSCH: Physical Downlink Shared Channel
- PDU: Packet Data Unit
- PGW: Packet Gateway
- PHICH: Physical Hybrid-ARQ Indicator Channel
- PLMN: Public Land Mobile Network
- PMI: Precoder Matrix Indicator
- PO: PUSCH Occasion
- PRACH: Physical Random Access Channel
- PRB: Physical Resource Block
- PRS: Positioning Reference Signal
- PS: Packet Switched
- PSCell: Primary Secondary Cell
- PSC: Primary serving Cell
- PSS: Primary Synchronization Signal
- PUCCH: Physical Uplink Control Channel
- PUSCH: Physical Uplink Shared Channel
- QAM: Quadrature Amplitude Modulation
- RA: Random Access
- RACH: Random Access Channel
- RAB: Radio Access Bearer
- RAN: Radio Access Network
- RANAP: Radio Access Network Application Part
- RAR: Random Access Response
- RAT: Radio Access Technology
- RF: Radio Frequency
- RLC: Radio Link Control
- RLM: Radio Link Monitoring
- RMSI: Remaining Minimum System Information
- RNC: Radio Network Controller
- RNTI: Radio Network Temporary Identifier
- RO: RACH Occasion (equivalent to PRACH occasion)
- RRC: Radio Resource Control
- RRM: Radio Resource Management
- RRH: Remote Radio Head
- RRU: Remote Radio Unit
- RS: Reference Signal
- RSCP: Received Signal Code Power
- RSRP: Reference Signal Received Power
- RSRQ: Reference Signal Received Quality
- RSSI: Received Signal Strength Indicator
- RSTD: Reference Signal Time Difference
- RTT: Roundtrip Time
- RU: Resource Unit
- RV: Redundancy Version
- RX: Receiver
- RWR: Release with Redirect
- SCC: Secondary Component Carrier
- SCH: Synchronization Channel
- SCell: Secondary Cell
- SCG: Secondary Cell Group
- SCS: Subcarrier Spacing
- SCAP: Service Data Adaptation Protocol
- SDU: Service Data Unit
- SeNB: Secondary eNodeB
- SFN: System Frame Number
- SGW: Serving Gateway
- SI: System Information or Study Item
- SIB: System Information Block
- SIB1: System Information Block Type 1
- SID: Study Item Description
- SINR: Signal to Interference and Noise Ratio
- SNR: Signal to Noise Ratio
- S-NSSAI: Single Network Slice Selection Assistance Information
- SON: Self Organizing Network
- SS: Synchronization Signal
- SSC: Secondary Serving Cell
- SSS: Secondary Synchronization Signal
- TA: Timing Advance
- TBS: Transport Block Size
- TDD: Time Division Duplex
- TDOA: Time Difference of Arrival
- TDM: Time Division Multiplexing
- TLE: Two-Line Element Set/Two-Line Element
- TOA: Time of Arrival
- TR: Technical Report
- TS: Technical Specification
- TSS: Tertiary Synchronization Signal
- TTI: Transmission Time Interval
- TX: Transmitter
- UARFCN: UTMS Absolute Radio Frequency Channel Number
- UCI: Uplink Control Information
- UE: User Equipment
- UL: Uplink
- UMTS: Universal Mobile Telecommunication System
- UpPTS: Uplink Pilot Time Slot
- URLLC: Ultra-Reliable Low-Latency Communication
- USIM: Universal Subscriber Identity Module
- UTC: Coordinated Universal Time
- UTDOA: Uplink Time Difference of Arrival
- UTRA: Universal Terrestrial Radio Access
- UTRAN: Universal Terrestrial Radio Access Network
- WCDMA: Wide CDMA
- WI: Work Item
- WID: Work Item Description
- WLAN: Wide Local Area Network

### REFERENCES

1. RP-193264, WID: Rel-17 enhancements for NB-IoT and LTE-MTC, RAN #86, Sitges, Spain, December 9th-12th, 2019.
2. 3GPP TS 36.211, "Evolved Universal Terrestrial Radio Access (E-UTRA); Physical channels and modulation," version 17.0.0.
3. 3GPP TS 36.212, "Evolved Universal Terrestrial Radio Access (E-UTRA); Multiplexing and channel coding," version 17.0.0.
4. 3GPP TS 36.213, "Evolved Universal Terrestrial Radio Access (E-UTRA); Physical layer procedures," version 17.0.0.
5. R1-2112363, "On the support of 16-QAM for unicast in UL and DL in TDD NB-IoT," Ericsson, RAN1# 107-e, e-Meeting, November 11th - 19th, 2021.

## Claims

1. A method by a network node (710A, 710B, 900), the method comprising:
indicating, to a user equipment, UE (712A, 712B, 800), a modulation to be used for a narrowband physical downlink shared channel, NPDSCH, in a downlink pilot time slot, DwPTS, in a special subframe with a special subframe configuration in time division duplex, TDD, narrowband internet of things, NB-IoT,
wherein the network node configures the UE with the special subframe configuration,
wherein the special subframe configuration is selected from among special subframe configurations 1, 2, 3, 4, 6, 7 and 8, if the indicated modulation is 16 quadrature amplitude modulation, 16-QAM,
wherein the special subframe configuration is selected from among special subframe configurations 1, 2, 3, 4, 6, 7, 8 and 9, if the indicated modulation is a modulation with lower modulation order than 16-QAM,
wherein the NPDSCH is without repetitions.

2. The method of claim 1, wherein the NPDSCH is with normal cyclic prefix.

3. The method of any of claims 1-2, further comprising:
transmitting the NPDSCH in accordance with the indicated modulation and the selected special subframe configuration.

4. The method of any of claims 1-3, wherein special subframe configuration 9 is not used for NPDSCH in DwPTS in a special subframe in TDD NB-IoT with 16-QAM.

5. A method by a user equipment, UE (712A, 712B, 800), the method comprising:
receiving, from a network node, an indication of a modulation to be used for a narrowband physical downlink shared channel, NPDSCH, in a downlink pilot time slot, DwPTS, in a special subframe with a special subframe configuration in time division duplex, TDD, narrowband internet of things, NB-IoT,
wherein the UE is configured with the special subframe configuration by the network node,
wherein the special subframe configuration is selected from among special subframe configurations 1, 2, 3, 4, 6, 7 and 8, if the indicated modulation is 16 quadrature amplitude modulation, 16-QAM,wherein the special subframe configuration is selected from among special subframe configurations 1, 2, 3, 4, 6, 7, 8 and 9, if the indicated modulation is a modulation with lower modulation order than 16-QAM,
wherein the NPDSCH is without repetitions.

6. The method of claim 5, wherein NPDSCH is with normal cyclic prefix.

7. The method of any of claims 5-6, further comprising:
receiving the NPDSCH in accordance with the indicated modulation and the selected special subframe configuration.

8. The method of any of claims 5-7, wherein special subframe configuration 9 is not used for NPDSCH in DwPTS in a special subframe in TDD NB-IoT with 16-QAM.

9. A network node (710A, 710B, 900) configured to:
indicate, to a user equipment, UE (712A, 712B, 800), a modulation to be used for a narrowband physical downlink shared channel, NPDSCH, in a downlink pilot time slot, DwPTS, in a special subframe with a special subframe configuration in time division duplex, TDD, narrowband internet of things, NB-IoT,
wherein the network node configures the UE with the special subframe configuration,
wherein the special subframe configuration is selected from among special subframe configurations 1, 2, 3, 4, 6, 7 and 8, if the indicated modulation is 16 quadrature amplitude modulation, 16-QAM,
wherein the special subframe configuration is selected from among special subframe configurations 1, 2, 3, 4, 6, 7, 8 and 9, if the indicated modulation is a modulation with lower modulation order than 16-QAM,
wherein the NPDSCH is without repetitions.

10. The network node of claim 9, wherein the NPDSCH is with normal cyclic prefix.

11. The network node of any of claims 9-10, further configured to:
transmit the NPDSCH in accordance with the indicated modulation and the selected special subframe configuration.

12. A user equipment, UE (712A, 712B, 800), configured to:
receive, from a network node, an indication of a modulation to be used for a narrowband physical downlink shared channel, NPDSCH, in a downlink pilot time slot, DwPTS, in a special subframe with a special subframe configuration in time division duplex, TDD, narrowband Internet of things, NB-IoT,
wherein the UE is configured with the special subframe configuration by the network node,
wherein the special subframe configuration is selected from among special subframe configurations 1, 2, 3, 4, 6, 7 and 8, if the indicated modulation is 16 quadrature amplitude modulation, 16-QAM,
wherein the special subframe configuration is selected from among special subframe configurations 1, 2, 3, 4, 6, 7, 8 and 9, if the indicated modulation is a modulation with lower modulation order than 16-QAM,
wherein the NPDSCH is without repetitions.

13. The user equipment of claim 12, wherein NPDSCH is with normal cyclic prefix.

14. The user equipment of any of claims 12-13, further configured to:
receive the NPDSCH in accordance with the indicated modulation and the selected special subframe configuration.

15. The user equipment of any of claims 12-14, wherein special subframe configuration 9 is not used for NPDSCH in DwPTS in a special subframe in TDD NB-IoT with 16-QAM.

## Patentansprüche

1. Verfahren durch einen Netzknoten (710A, 710B, 900), wobei das Verfahren Folgendes umfasst:
Angeben, an eine Benutzerausrüstung, UE (712A, 712B, 800), einer Modulation, die für einen schmalbandigen gemeinsam genutzten physischen Downlink-Kanal, NPDSCH, in einem Downlink-Pilot-Zeitschlitz, DwPTS, in einem speziellen Subframe mit einer speziellen Subframe-Konfiguration in einem Zeitduplexverfahren, TDD, in einem schmalbandigen Internet der Dinge, NB-IoT, zu verwenden ist,
wobei der Netzknoten die UE mit der speziellen Subframe-Konfiguration konfiguriert,
wobei die spezielle Subframe-Konfiguration ausgewählt ist aus speziellen Subframe-Konfigurationen 1, 2, 3, 4, 6, 7 und 8, wenn es sich bei der angegebenen Modulation um eine 16-stufige Quadraturamplitudenmodulation, 16-QAM, handelt,
wobei die spezielle Subframe-Konfiguration ausgewählt ist aus speziellen Subframe-Konfigurationen 1, 2, 3, 4, 6, 7, 8 und 9, wenn es sich bei der angegebenen Modulation um eine Modulation mit einer niedrigeren Modulationsordnung als eine 16-QAM handelt,
wobei der NPDSCH keine Wiederholungen aufweist.

2. Verfahren nach Anspruch 1, wobei der NPDSCH ein normales zyklisches Präfix aufweist.

3. Verfahren nach einem der Ansprüche 1-2, ferner umfassend:
Übertragen des NPDSCH gemäß der angegebenen Modulation und der ausgewählten speziellen Subframe-Konfiguration.

4. Verfahren nach einem der Ansprüche 1-3, wobei die spezielle Subframe-Konfiguration 9 nicht für den NPDSCH in dem DwPTS in einem speziellen Subframe in einem TDD NB-IoT mit einer 16-QAM verwendet wird.

5. Verfahren durch eine Benutzerausrüstung, UE (712A, 712B, 800), wobei das Verfahren Folgendes umfasst:
Empfangen, von einem Netzknoten, einer Angabe einer Modulation, die für einen schmalbandigen gemeinsam genutzten physischen Downlink-Kanal, NPDSCH, in einem Downlink-Pilot-Zeitschlitz, DwPTS, in einem speziellen Subframe mit einer speziellen Subframe-Konfiguration in einem Zeitduplexverfahren, TDD, in einem schmalbandigen Internet der Dinge, NB-IoT, zu verwenden ist,
wobei die UE mit der speziellen Subframe-Konfiguration durch den Netzknoten konfiguriert ist, wobei die spezielle Subframe-Konfiguration ausgewählt ist aus speziellen Subframe-Konfigurationen 1, 2, 3, 4, 6, 7 und 8, wenn die angegebene Modulation eine 16-stufige Quadraturamplitudenmodulation, 16-QAM, ist, wobei die spezielle Subframe-Konfiguration ausgewählt ist aus speziellen Subframe-Konfigurationen 1, 2, 3, 4, 6, 7, 8 und 9, wenn es sich bei der angegebenen Modulation um eine Modulation mit einer niedrigeren Modulationsordnung als eine 16-QAM handelt,
wobei der NPDSCH keine Wiederholungen aufweist.

6. Verfahren nach Anspruch 5, wobei der NPDSCH ein normales zyklisches Präfix aufweist.

7. Verfahren nach einem der Ansprüche 5-6, ferner umfassend:
Empfangen des NPDSCH gemäß der angegebenen Modulation und der ausgewählten speziellen Subframe-Konfiguration.

8. Verfahren nach einem der Ansprüche 5-7, wobei die spezielle Subframe-Konfiguration 9 nicht für den NPDSCH in dem DwPTS in einem speziellen Subframe in einem TDD NB-IoT mit einer 16-QAM verwendet wird.

9. Netzknoten (710A, 710B, 900), der zu Folgendem konfiguriert ist:
Angeben, an eine Benutzerausrüstung, UE (712A, 712B, 800), einer Modulation, die für einen schmalbandigen gemeinsam genutzten physischen Downlink-Kanal, NPDSCH, in einem Downlink-Pilot-Zeitschlitz, DwPTS, in einem speziellen Subframe mit einer speziellen Subframe-Konfiguration in einem Zeitduplexverfahren, TDD, in einem schmalbandigen Internet der Dinge, NB-IoT, zu verwenden ist,
wobei der Netzknoten die UE mit der speziellen Subframe-Konfiguration konfiguriert,
wobei die spezielle Subframe-Konfiguration ausgewählt ist aus speziellen Subframe-Konfigurationen 1, 2, 3, 4, 6, 7 und 8, wenn es sich bei der angegebenen Modulation um eine 16-stufige Quadraturamplitudenmodulation, 16-QAM, handelt,
wobei die spezielle Subframe-Konfiguration ausgewählt ist aus speziellen Subframe-Konfigurationen 1, 2, 3, 4, 6, 7, 8 und 9, wenn es sich bei der angegebenen Modulation um eine Modulation mit einer niedrigeren Modulationsordnung als eine 16-QAM handelt,
wobei der NPDSCH keine Wiederholungen aufweist.

10. Netzknoten nach Anspruch 9, wobei der NPDSCH ein normales zyklisches Präfix aufweist.

11. Netzknoten nach einem der Ansprüche 9-10, der ferner zu Folgendem konfiguriert ist:
Übertragen des NPDSCH gemäß der angegebenen Modulation und der ausgewählten speziellen Subframe-Konfiguration.

12. Benutzerausrüstung, UE (712A, 712B, 800), die zu Folgendem konfiguriert ist:
Empfangen, von einem Netzknoten, einer Angabe einer Modulation, die für einen schmalbandigen gemeinsam genutzten physischen Downlink-Kanal, NPDSCH, in einem Downlink-Pilot-Zeitschlitz, DwPTS, in einem speziellen Subframe mit einer speziellen Subframe-Konfiguration in einem Zeitduplexverfahren, TDD, in einem schmalbandigen Internet der Dinge, NB-IoT, zu verwenden ist,
wobei die UE mit der speziellen Subframe-Konfiguration durch den Netzknoten konfiguriert ist,
wobei die spezielle Subframe-Konfiguration ausgewählt ist aus speziellen Subframe-Konfigurationen 1, 2, 3, 4, 6, 7 und 8, wenn es sich bei der angegebenen Modulation um eine 16-stufige Quadraturamplitudenmodulation, 16-QAM, handelt,
wobei die spezielle Subframe-Konfiguration ausgewählt ist aus speziellen Subframe-Konfigurationen 1, 2, 3, 4, 6, 7, 8 und 9, wenn es sich bei der angegebenen Modulation um eine Modulation mit einer niedrigeren Modulationsordnung als eine 16-QAM handelt,
wobei der NPDSCH keine Wiederholungen aufweist.

13. Benutzerausrüstung nach Anspruch 12, wobei der NPDSCH ein normales zyklisches Präfix aufweist.

14. Benutzerausrüstung nach einem der Ansprüche 12-13, die ferner zu Folgendem konfiguriert ist:
Empfangen des NPDSCH gemäß der angegebenen Modulation und der ausgewählten speziellen Subframe-Konfiguration.

15. Benutzerausrüstung nach einem der Ansprüche 12-14, wobei die spezielle Subframe-Konfiguration 9 nicht für den NPDSCH in dem DwPTS in einem speziellen Subframe in einem TDD NB-IoT mit einer 16-QAM verwendet wird.

## Revendications

1. Procédé exécuté par un nœud de réseau (710A, 710B, 900), le procédé comprenant :
l'indication, à un équipement utilisateur, UE (712A, 712B, 800), d'une modulation à utiliser pour un canal physique partagé de liaison descendante à bande étroite, NPDSCH, dans un intervalle de temps pilote de liaison descendante, DwPTS, d'une sous-trame spéciale avec une configuration de sous-trame spéciale en Internet des objets à bande étroite, NB-IoT, à duplexage par répartition dans le temps, TDD,
dans lequel le nœud de réseau configure l'UE avec la configuration de sous-trame spéciale,
dans lequel la configuration de sous-trame spéciale est sélectionnée parmi les configurations de sous-trames spéciales 1, 2, 3, 4, 6, 7 et 8, si la modulation indiquée est une modulation d'amplitude en quadrature à 16 états, 16-QAM,
dans lequel la configuration de sous-trame spéciale est sélectionnée parmi les configurations de sous-trames spéciales 1, 2, 3, 4, 6, 7, 8 et 9, si la modulation indiquée est une modulation ayant un ordre de modulation inférieur à 16-QAM,
dans lequel le NPDSCH est sans répétition.

2. Procédé selon la revendication 1, dans lequel le NPDSCH comporte un préfixe cyclique normal.

3. Procédé selon la revendication 1 ou 2, comprenant en outre :
la transmission du NPDSCH conformément à la modulation indiquée et à la configuration de sous-trame spéciale sélectionnée.

4. Procédé selon l'une quelconque des revendications 1 à 3, dans lequel la configuration de sous-trame spéciale 9 n'est pas utilisée pour le NPDSCH dans le DwPTS d'une sous-trame spéciale en NB-IoT TDD avec 16-QAM.

5. Procédé exécuté par un équipement utilisateur, UE (712A, 712B, 800), le procédé comprenant :
la réception, à partir d'un nœud de réseau, d'une indication d'une modulation à utiliser pour un canal physique partagé de liaison descendante à bande étroite, NPDSCH, dans un intervalle de temps pilote de liaison descendante, DwPTS, d'une sous-trame spéciale avec une configuration de sous-trame spéciale en Internet des objets à bande étroite, NB-IoT, à duplexage par répartition dans le temps, TDD,
dans lequel l'UE est configuré avec la configuration de sous-trame spéciale par le nœud de réseau, dans lequel la configuration de sous-trame spéciale est sélectionnée parmi les configurations de sous-trames spéciales 1, 2, 3, 4, 6, 7 et 8, si la modulation indiquée est une modulation d'amplitude en quadrature à 16 états, 16-QAM, dans lequel la configuration de sous-trame spéciale est sélectionnée parmi les configurations de sous-trames spéciales 1, 2, 3, 4, 6, 7, 8 et 9, si la modulation indiquée est une modulation ayant un ordre de modulation inférieur à 16-QAM,
dans lequel le NPDSCH est sans répétition.

6. Procédé selon la revendication 5, dans lequel le NPDSCH comporte un préfixe cyclique normal.

7. Procédé selon l'une quelconque de la revendication 5 à 6, comprenant en outre :
la réception du NPDSCH conformément à la modulation indiquée et à la configuration de sous-trame spéciale sélectionnée.

8. Procédé selon l'une quelconque des revendications 5 à 7, dans lequel la configuration de sous-trame spéciale 9 n'est pas utilisée pour le NPDSCH dans le DwPTS d'une sous-trame spéciale en NB-IoT TDD avec 16-QAM.

9. Nœud de réseau (710A, 710B, 900) configuré pour :
indiquer, à un équipement utilisateur, UE (712A, 712B, 800), une modulation à utiliser pour un canal physique partagé de liaison descendante à bande étroite, NPDSCH, dans un intervalle de temps pilote de liaison descendante, DwPTS, d'une sous-trame spéciale avec une configuration de sous-trame spéciale en Internet des objets à bande étroite, NB-IoT, à duplexage par répartition dans le temps, TDD,
dans lequel le nœud de réseau configure l'UE avec la configuration de sous-trame spéciale,
dans lequel la configuration de sous-trame spéciale est sélectionnée parmi les configurations de sous-trames spéciales 1, 2, 3, 4, 6, 7 et 8, si la modulation indiquée est une modulation d'amplitude en quadrature à 16 états, 16-QAM,
dans lequel la configuration de sous-trame spéciale est sélectionnée parmi les configurations de sous-trames spéciales 1, 2, 3, 4, 6, 7, 8 et 9, si la modulation indiquée est une modulation ayant un ordre de modulation inférieur à 16-QAM,
dans lequel le NPDSCH est sans répétition.

10. Nœud de réseau selon la revendication 9, dans lequel le NPDSCH comporte un préfixe cyclique normal.

11. Nœud de réseau selon l'une quelconque de la revendication 9 à 10, configuré en outre pour :
transmettre le NPDSCH conformément à la modulation indiquée et à la configuration de sous-trame spéciale sélectionnée.

12. Équipement utilisateur, UE (712A, 712B, 800), configuré pour :
recevoir, à partir d'un nœud de réseau, une indication d'une modulation à utiliser pour un canal physique partagé de liaison descendante à bande étroite, NPDSCH, dans un intervalle de temps pilote de liaison descendante, DwPTS, d'une sous-trame spéciale avec une configuration de sous-trame spéciale en Internet des objets à bande étroite, NB-IoT, à duplexage par répartition dans le temps, TDD,
dans lequel l'UE est configuré avec la configuration de sous-trame spéciale par le nœud de réseau,
dans lequel la configuration de sous-trame spéciale est sélectionnée parmi les configurations de sous-trames spéciales 1, 2, 3, 4, 6, 7 et 8, si la modulation indiquée est une modulation d'amplitude en quadrature à 16 états, 16-QAM,
dans lequel la configuration de sous-trame spéciale est sélectionnée parmi les configurations de sous-trames spéciales 1, 2, 3, 4, 6, 7, 8 et 9, si la modulation indiquée est une modulation ayant un ordre de modulation inférieur à 16-QAM,
dans lequel le NPDSCH est sans répétition.

13. Équipement utilisateur selon la revendication 12, dans lequel le NPDSCH comporte un préfixe cyclique normal.

14. Équipement utilisateur selon l'une quelconque de la revendication 12 à 13, configuré en outre pour :
recevoir le NPDSCH conformément à la modulation indiquée et à la configuration de sous-trame spéciale sélectionnée.

15. Équipement utilisateur selon l'une quelconque des revendications 12 à 14, dans lequel la configuration de sous-trame spéciale 9 n'est pas utilisée pour le NPDSCH dans le DwPTS d'une sous-trame spéciale en NB-IoT TDD avec 16-QAM.
